# EUROPEAN PATENT APPLICATION

(11) **EP 3 581 030 A1**
(43) Date of publication of application: **18.12.2019**
(21) Application number: 17895690.0
(22) Date of filing: 07.08.2017
(51) Int. Cl.: A21D 8/02, A21D 8/06, A21D 10/02, A21C 9/00, G07F 17/00, G07F 9/10, G07F 11/70

(54) **METHOD FOR PREPARING FOODS BASED ON DOUGHS FROZEN IN PORTIONS AND MACHINE FOR PREPARING AND SELLING SAID FOODS**

(30) Priority: 07.02.2017 ES 201730112 U; 07.02.2017 ES 201730142; 07.06.2017 ES 201730780
(71) Applicant: Rodriguez Barbero Moreno, Luis Miguel, 28280 Madrid (ES); Serrano Vacas, Juan Carlos, 49006 Zamora (ES); Monferrer Tena, Joan Antoni, 08820 El Prat de Llobregat (Barcelona) (ES)
(72) Inventor: RODRIGUEZ BARBERO MORENO, Luis Miguel, 28280 Madrid (ES)
(74) Representative: AWA Denmark A/S
(86) International application number: PCT/ES2017/070570
(87) International publication number: WO 2018/146349

(57) **Abstract**

A process for preparing food from frozen dough portions comprising a first preparation step in a kitchen, which comprises the sub-steps of:
- kneading a mixture of wheat flour, boiling water and salt until the mixture reaches a doughy consistency,
- cooling the mixture,
- moulding some portions from that mixture,
- pre-frying the portions, and
- freezing the pre-fried portions;
including a second step of finishing at a consumption site, consisting of the baking of the portions with no added oil.

The invention also comprises a machine for implementing the second step and dispensing the product

## Description

### PURPOSE OF THE INVENTION

This invention is a process for preparing food from frozen dough portions, for example churros (a fried dough pastry), and a machine for the preparation and sale of those foods.

### BACKGROUND OF THE INVENTION

There currently exists a process for preparing food from frozen dough portions, typically churros, comprising the preparation of the dough, the moulding of it in portions and freezing it for preservation until the time it is finished when it is to be consumed, and the frying of those portions at high temperature at the time of finishing for consumption.

This process requires fryers where it is finished for consumption, with the associated drawbacks of:
- danger from the hot oil,
- the need to keep it permanently hot, or the need to heat it frequently, with its concomitant energy expenditure, for short periods of use when the preparation and serving happen spread out over time,
- the deterioration and oxidation of the oil due to the successive heatings or the permanent heating, which affects both the taste and the quality of this fat when ingested, the more oxidised it is, the more likely it is to affect the consumers' cholesterol levels,
- the need to replace the oil,
- the need to clean away the accumulations of fats from the frying.

Likewise, there also exist machines for preparing and selling food from frozen dough portions, for example churros, comprising a structure with a sealed enclosure with a customer interface, provided with a means of selection, a means of payment, and a delivery pod after the selection has been made through the means of selection, and the payment completed by the means of payment, and internally comprising a refrigerated store to keep the portions frozen until the time of preparation, and a fryer in which these portions are prepared on the spot when selected.

These machines fulfil their function satisfactorily, although having fryers inside them creates a number of problems, such as the danger from hot oil in the event of vandalism, the need to keep that oil hot permanently, or the need to heat it frequently, with the concomitant energy expenditure, for short periods of use when the preparation and serving happen spread out over time. The deterioration and oxidation of the oil due to the successive heatings or the permanent heating, which affects both the taste and the quality of this fat when ingested, the more oxidised it is, the more likely it is to affect the consumers' cholesterol levels, as well as the need to replace it. The dirtiness due to the accumulation of fat throughout the interior of the machine, odours, the increased clogging of filters, etc., in addition to the increased energy use of the cold store due to the need to overcome the heat coming from the oil in the fryer.

### INVENTION DISCLOSURE

The invention's process for the preparation of food from frozen dough portions achieves a cleaner preparation and does not involve frying in oil, which also implies a lower energy expenditure.

According to the invention, the method includes a first step of preparing the portions of frozen dough in a kitchen, including the sub-steps of:
- kneading a mixture of wheat flour, boiling water and salt until the mixture reaches a doughy consistency,
- cooling the mixture,
- moulding the portions from that mixture,
- pre-frying the portions, and
- freezing the pre-fried portions;
including a second step of finishing at a consumption site, consisting of the baking of the portions with no added oil.

Finest quality raw materials will be used to ensure good results. This way it is possible to dispense with the oil, with all its inconveniences, which have been described.

The machine of the invention is configured to perform the second step of the process, with in-situ finishing of the preparation by heating the frozen dough without the need for frying.

The machine is of the type consisting of a structure with a sealed enclosure with a customer interface, provided with a means of selection, a means of payment, and a delivery pod for the portions after they have been prepared once the selection has been made using the means of selection and the payment completed by the means of payment and in accordance with the invention, further including:
- a refrigerated store for the pre-fried product,
- an oven for heating,
- a dispenser of the portions from the cold store to the oven,
- the means for carrying the baked dough to the delivery pod, and
- an operations controller.

In this way, the oven will finish the preparation without the addition of oil, thereby dispensing with all the inconveniences that come with it, and that have been described.

The machine hardly needs any maintenance, since it will only require cleaning of the oven approximately every 2 months and the changing or cleaning of filters for removing smoke and odours every 6 months, if it has them, besides the obvious restocking of the product depending on the sales.

### BRIEF DESCRIPTION OF DIAGRAMS

Figure 1 shows an exterior view of the machine of the invention, in a floor-mounted version.
Figure 2 shows an exterior view of the machine of the invention, in a table-top version.
Figure 3 shows an internal schematic view of the machine of the invention.
Figure 4 shows a detail of the refrigerated store and tunnel oven assembly of the machine of the invention.
Figure 5 shows a detail in cross-section of the dispenser of portions from the refrigerated store of the machine of the invention.

### DESCRIPTION OF A PRACTICAL IMPLEMENTATION OF THE INVENTION

The invention's process for preparing frozen dough portion foods includes a first cooking step which includes the sub-steps of:
- kneading a mixture of wheat flour, boiling water and salt until the mixture reaches a doughy consistency,
- cooling the mixture,
- moulding some portions from that mixture,
- pre-frying the portions, and
- freezing the pre-fried portions;
including a second step of finishing at a consumption site, consisting of the baking of the portions with no added oil.

That baking of the portions will preferably be carried out at a temperature of between 350 and 400 degrees for 1 to 2 minutes to achieve an outer browning and a complete heating of the portions, and ideally at 380 degrees for 1 minute and 35 seconds, which is the combination which has produced the best results

The pre-frying sub-step preferably includes introducing the portions into olive oil at a temperature of between 190 and 230 degrees for 2 minutes and 20 seconds, which according to the tests that were carried out, are the best conditions for the conditions in which the baking will be carried out.

The portion moulding step ideally consists of the forming of straight portions, which gives a greater storage capacity than the traditional curved shapes of churros.

Alternatively, the finishing step at the consumption site comprises baking the portions at a temperature of between 230 and 300 degrees for 30 to 90 seconds, to achieve a lower exposure of the oil to high temperatures and for less time, helping to preserve them and also helping the oil absorbed in the churro to have better properties and to be less oxidised, and even that the pre-fried churro absorbs less oil, giving a lower energy expenditure, improving the delivery possibilities for the product in vending machines, where the pre-frying of the churro is done in a central kitchen or facility, and then the product is finished at the time of delivery by baking, since reducing the power needed by the oven means lower power rated electrical cabling for the vending machine, and the baking temperature is reached faster, with less preparation time, and thus waiting time for the consumer.

In this case, the best results for the finishing at the site of consumption step have been found to come from the baking of the portions at 250 degrees for 60 seconds.

These other values for the temperature and time parameters of the finishing at the site of consumption step also allow adjusting the temperature and time of the pre-frying sub-step, which can then be done at temperatures between 190 degrees and 230 degrees for a time between 1 minute and 50 seconds and 2 minutes and 20 seconds, and ideally at a temperature of 215 degrees for 2 minutes and 20 seconds, since these are the values for which the lowest number of quality defects were found during the tests carried out.

In this case the oil used in the pre-frying sub-step would ideally be olive oil and/or high oleic sunflower oil

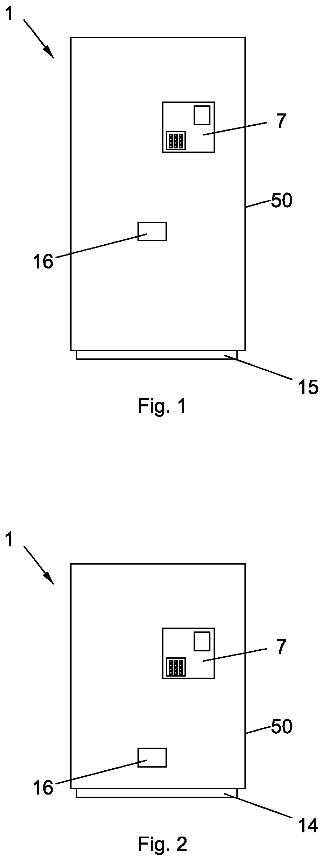

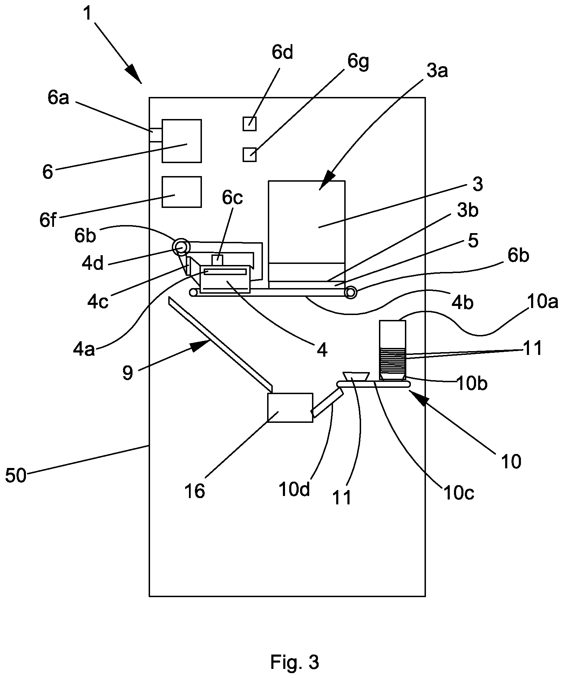

The machine (1) of the invention is, in turn, capable of finishing the preparation and delivering the food portions (2) made from previously frozen dough, and is of the type including (see Figures. 1 and 2) a structure with a sealed enclosure (50) with a customer interface (7) provided with a means of selection, a means of payment, and a pod (16) for delivery once the selection has been made through the means of selection, and payment completed through the means of payment, which, according to the invention, includes (see fig. 3):
- a refrigerated store (3) for the pre-fried product,
- an oven (4) for heating,
- a dispenser (5) of portions (2) from the cold store (3) to the oven (4),
- the means of carrying the baked dough to the delivery pod, and
- an operations controller (6).

It is envisaged that the oven (4) includes a tunnel oven with a means of heating (resistors (4a)) and a first conveyor belt (4b) for the portions (2) within it, which allows baking while the portion (2) travels towards the pod (16).

The oven (4) also includes filters (4c) (for example activated carbon) and a means of internal air recirculation through those filters (4c) (impellers and/or fans (4d)) to achieve a clean interior environment.

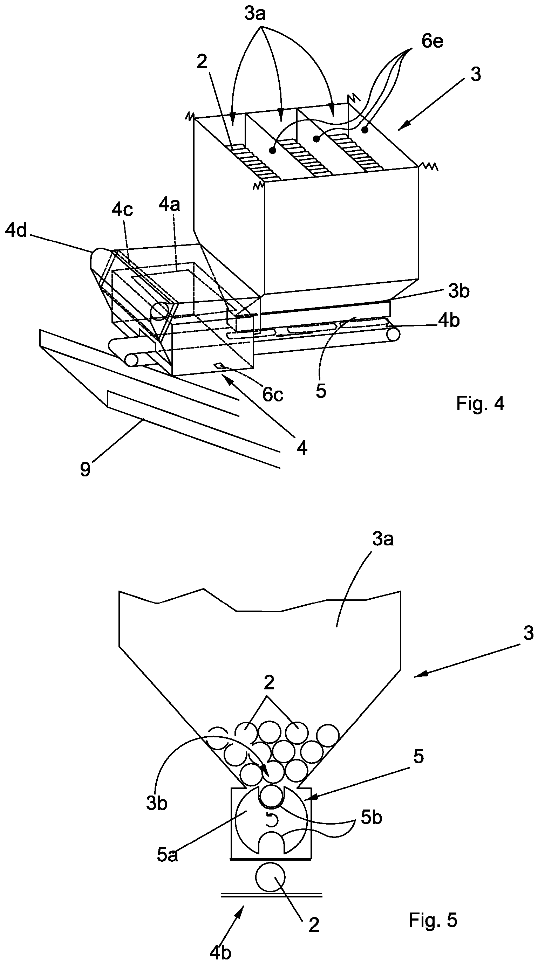

The refrigerated store (3), for its part, includes an upper hopper (3a), in this case a triple one (see figure 4), provided with a single lower outlet (3b) of a size chosen for the release of the portions (2) one at a time, in which is the the portion (2) dispenser (5). This dispenser (5) ideally consists of a cylinder (5a) with longitudinal grooves (5b) of a slightly larger size than a portion (2) and a motor, not shown, for rotating the cylinder (5a) so that the longitudinal grooves (5b) are located uppermost to receive a single portion (2) and then move to the bottom to let the portion (2) fall onto the oven's (4) first conveyor belt (4b), all in a manner consistent with the optimised straight shape of the portions (2).

The means of transporting the baked dough to the delivery pod (16) comprises a first ramp (9) (see figures 3 and 4) set at the end of the oven's (4) first conveyor belt (4b), and which leads to that delivery pod (16), thus only that first conveyor belt (4b) is required as a transport element, simplifying the machine's (1) mechanisms.

The controller (6) is connected to motor operation sensors (6b) (e.g. encoders) and/or second temperature sensors (6c) and/or third inertial sensors (6d) (to prevent or detect acts of vandalism) and/or fourth level sensors (6e) and/or fifth machine (1) connection sensors (6f) and/or sixth GPS position sensors (6g) -should the machine be removed- and/or dispensing counters, not shown, to count the portions (2) that remain, and whether it is necessary to refill the machine. Furthermore, it is envisaged that the controller (6) ideally includes an external connection interface (6a) for data transfer to a control centre, not shown, of incidents or sensor readings.

Additionally, it is envisaged that the machine (1) may include a container (11) feeder (10) which would comprise a container (11) stacker (10a), a lower container (11) retainer (10b). a second conveyor belt (10c) placed under the retainer (10b) so as to be in contact with the stacker's (10a) bottom container (11), and a second ramp (10d) which leads to the delivery pod (16). When the second conveyor belt (10b) is started, it pulls the bottom container (11) of the stack towards the second ramp (10c). It is also envisaged that it may include additional dispensers - not shown and of a similar configuration to the foregoing - for accessories such as sugar, salt, cheese, jam, napkins and/or hot beverages, including in that case an accessory heater, not shown.

Two possible machine configurations are envisaged; for example a first configuration would have a height of between 30 cm and 1.30 m, and feet (14) for supporting it on a table or shelf (see figure 2), in which, due to the small space available, some or all of the accessories may be dispensed with. Another possible version of the machine would have a height of between 1.30 and 2.00 and feet (15) for supporting it on the floor (see figure 1), and, thanks to its greater capacity, it can have all the accessories

Having sufficiently described the nature of the invention, as well as how it functions in practice, it must be stated that the provisions set out above and shown in the accompanying diagrams may be changed in some details as long as these do not alter the fundamental principle.

## Claims

1. A process for preparing food from frozen dough portions **characterised by** the inclusion of a first preparation step in a kitchen which includes the sub-steps of:
- kneading a mixture of wheat flour, boiling water and salt until the mixture reaches a doughy consistency,
- cooling the mixture,
- moulding some portions from that mixture,
- pre-frying the portions, and
- freezing the pre-fried portions;
including a second step of finishing at a consumption site, consisting of the baking of the portions with no added oil.

2. A process for preparing food from frozen dough portions according to claim 1, **characterised by** a finishing step at the consumption site consisting of baking the portions at a temperature of between 350 and 400 degrees for 1 to 2 minutes

3. A process for preparing food from frozen dough portions according to claim 2, **characterised by** a finishing step at the consumption site consisting of baking the portions at 380 degrees for 1 minute and 35 seconds.

4. A process for preparing food from frozen dough portions according to claim 1, **characterised by** a finishing step at the consumption site consisting of baking the portions at a temperature of between 230 and 300 degrees for 30 to 90 seconds

5. A process for preparing food from frozen dough portions according to claim 4, **characterised by** a finishing step at the consumption site consisting of baking the portions at 250 degrees for 60 seconds.

6. A process for preparing food from frozen dough portions according to any of the preceding claims, **characterised by** the pre-frying sub-step of the preparation consisting of submerging the portions in oil at a temperature of between 190 and 230 degrees for a time of between 1 minute and 50 seconds and 2 minutes and 20 seconds

7. A process for preparing food from frozen dough portions according to claim 6, **characterised by** the pre-frying sub-step consisting of submerging the portions in oil at a temperature of 215 degrees for 2 minutes and 20 seconds.

8. A process for preparing food from frozen dough portions according to any one of claims 4 to **7,characterised by** the oil used in the pre-frying step being olive oil and/or high oleic sunflower oil.

9. A process for preparing food from frozen dough portions according to any of the preceding claims, **characterised by** the portion moulding step consisting of the forming of straight portions.

10. A machine (1) for preparing and selling food from frozen dough portions (2); of the type comprising a structure with a sealed enclosure (50) with a customer interface (7) provided with a means of selection, a means of payment, and a delivery pod (16) after the selection has been made using the means of selection, and payment has been made using the means of payment, **characterised in that** itcomprises:
- a refrigerated store (3) for the pre-fried product,
- an oven (4) for heating,
- a dispenser (5) of portions (2) from the cold store (3) to the oven (4),
- the means of carrying the baked dough to the delivery pod, and
- an operations controller (6).

11. A machine (1) for the preparation and sale of food from frozen dough portions (2) according to claim 10, **characterised by** the oven (4) including a tunnel oven with a means of heating and a first conveyor belt (4b) for the portions (2) through the interior of that tunnel oven.

12. A machine (1) for the preparation and sale of food from frozen dough portions (2) according to any one of claims 10 or 11, **characterised by** the oven (4) including filters (4c) and a means of air recirculation through those filters (4c).

13. A machine (1) for the preparation and sale of food from frozen dough portions (2) according to any one of claims 10 to 12, **characterised by** the refrigerated store (3) including an upper hopper (3a) with a lower outlet (3b) in which is the portion (2) dispenser (5).

14. A machine (1) for the preparation and sale of food from frozen dough portions (2) according to claim 13, **characterised by** the portion (2) dispenser (5) consisting of a cylinder (5a) with longitudinal grooves (5b) of a slightly larger size than a portion (2) and a cylinder rotating motor (5a) so that the longitudinal grooves (5b) are located uppermost to receive a single portion (2) and then move downward to allow the portion (2) to fall on the oven's (4) first conveyor belt (4b).

15. A machine (1) for the preparation and sale of food from frozen dough portions (2) according to any one of claims 10 to 14, **characterised by** the means of carrying the baked dough to the delivery pod (16) including a first ramp (9) at the end of the oven's (4) first conveyor belt (4b), which leads to that delivery pod (16).

16. A machine (1) for the preparation and sale of food from frozen dough portions (2) according to any one of claims 10 to 15, **characterised by** the controller (6) being connected to the first motor operation sensors (6b) and/or the second temperature sensors (6c) and/or the third inertial sensors (6d) and/or the fourth level sensors (6e) and/or the fifth machine (1) connection sensors (6f) and/or the sixth GPS position sensors (6g) and/or dispensing counters.

17. A machine (1) for the preparation and sale of food from frozen dough portions (2) according to any one of claims 10 to 16, **characterised by** the controller (6) comprising an external data connection interface (6a) for data transfer about incidents or sensor readings to a control centre.

18. A machine (1) for the preparation and sale of food from frozen dough portions (2) according to any one of claims 10 to 17, **characterised in that it** consists of a container feeder (10) including a container (11) stacker (10a), a lower container (11) retainer (10b), a second conveyor belt (10c) placed under the retainer (10b) so as to be in contact with the bottom container (11) of the stacker (10a), and a second ramp (10d) leading to the delivery pod (16).

19. A machine (1) for the preparation and sale of food from frozen dough portions (2) according to any one of claims 10 to 18, **characterised in that it** includes additional accessory dispensers.

20. A machine (1) for the preparation and sale of food from frozen dough portions (2) according to claim 19, **characterised in that** the accessories are selected from among:
- sugar,
- salt,
- cheese.
- jam,
- napkins, and/or
hot drinks.

21. A machine (1) for the preparation and sale of food from frozen dough portions (2) according to claim 20, **characterised in that** itincludes at least one accessory heater.

22. A machine (1) for the preparation and sale of food from frozen dough portions (2) according to any one of claims 10 to 21, **characterised in that it** has a height of between 30 cm and 1.30 m and feet (14) for supporting it on a table or shelf

23. A machine (1) for the preparation and sale of food from frozen dough portions (2) according to any one of claims 10 to 21, **characterised in that it** has a height of between 1.30 and 2.00 and feet (15) for supporting it on the floor
